# EUROPEAN PATENT APPLICATION

(11) **EP 4 512 644 A1**
(43) Date of publication of application: **26.02.2025**
(21) Application number: 24193899.2
(22) Date of filing: 09.08.2024
(51) Int. Cl.: B60H 1/00, F28D 9/00, B60H 1/32

(54) **THERMAL MANAGEMENT INTEGRATED MODULE, THERMAL MANAGEMENT SYSTEM, AND VEHICLE**

(30) Priority: 16.08.2023 CN 202311036711
(71) Applicant: Huawei Digital Power Technologies Co., Ltd., Shenzhen, 518043 (CN)
(72) Inventor: LU, Linfeng, Shenzhen, 518043 (CN); LI, Quanming, Shenzhen, 518043 (CN); WONG, Ming Fung, Shenzhen, 518043 (CN)
(74) Representative: Pfenning, Meinig & Partner mbB

(57) **Abstract**

This application relates to a thermal management integrated module, a thermal management system, and a vehicle. The thermal management integrated module includes a water-side component 100, a refrigerant component 200, and a heat exchanger 300. The water-side component and the refrigerant component are respectively located on two opposite sides of the heat exchanger. According to this application, miniaturization of the thermal management integrated module can be implemented, and structural strength of the refrigerant substrate can be improved.

## Description

### TECHNICAL FIELD

This application relates to the field of thermal management technologies, and in particular, to a thermal management integrated module, a thermal management system, and a vehicle.

### BACKGROUND

Components of a thermal management system used in an existing electric vehicle are deployed in a scattering manner. As a result, a route of a coolant hose is long. Consequently, when liquid circulates in the coolant hose, a pressure loss is severe, and cooling effect or heating effect of a loop is affected.

In view of this, components in a thermal management system in a related technology are centrally deployed. The thermal management system in the related technology includes a water-side component, a refrigerant component, and a heat exchanger. The water-side component includes a water path substrate and a water tank. The refrigerant component includes a refrigerant substrate. The water-side component, the refrigerant component, and the heat exchanger are integrated together. The heat exchanger is integrated on a side that is of the refrigerant substrate and that is away from the water-side component. Therefore, a hole needs to be dug on the refrigerant substrate to place the heat exchanger. This causes a waste of a material of the refrigerant substrate. In addition, an extension area of the refrigerant substrate is excessively large. This is not conducive to miniaturization. In addition, because a size of the water tank is large, and there is a specific requirement for a mounting position of the water tank, a mounting environment of the thermal management system is limited, and environmental adaptability is reduced.

### SUMMARY

Embodiments of this application provide a thermal management integrated module, a thermal management system, and a vehicle, to implement miniaturization of the thermal management integrated module and improve structural strength of a refrigerant substrate.

According to a first aspect, an embodiment of this application provides a thermal management integrated module, including a water-side component, a refrigerant component, and a heat exchanger. The water-side component and the refrigerant component are respectively located on two opposite sides of the heat exchanger. The water-side component includes a water path substrate. A plumbing of the water path substrate is configured to accommodate a first medium. The refrigerant component includes a refrigerant substrate. A plumbing of the refrigerant substrate is configured to accommodate a second medium. The heat exchanger is located in a gap space formed by the water path substrate and the refrigerant substrate. Both the plumbing of the water path substrate and the plumbing of the refrigerant substrate communicate with a flow channel of the heat exchanger, so that the first medium exchanges heat with the second medium inside the heat exchanger. The water-side component has a first external connection port. The first external connection port is configured to connect to a water tank in a thermal management system through a coolant hose. The heat exchanger is located in the gap space formed by the water path substrate and the refrigerant substrate, to form a "sandwich" architecture, and there is no need to provide a through hole on the refrigerant substrate to place the heat exchanger. In this way, a base material for manufacturing the refrigerant substrate can be reduced, and costs can be reduced. In addition, because the through hole provided on the refrigerant substrate to place the heat exchanger is reduced, strength of the refrigerant substrate can be improved, and a size of the refrigerant substrate can be reduced. The refrigerant substrate is miniaturized, so that the strength of the refrigerant substrate can also be improved. In addition, the water tank may communicate with the first external connection port through the coolant hose, so that the water tank and the thermal management integrated module cooperate with each other in functions and are decoupled from each other in positions, to improve use performance of the water tank and the thermal management integrated module. In addition, the thermal management integrated module in this embodiment can be used in different environments, for example, can be used in both a vehicle and an energy storage system.

In some embodiments, all functional components of the water-side component are distributed at other positions of the water path substrate other than a surface that is of the water path substrate and that faces the heat exchanger. Because the surface that is of the water path substrate and that faces the heat exchanger corresponds to the heat exchanger, all the functional components of the water-side component are distributed at the other positions of the water path substrate other than the surface that is of the water path substrate and that faces the heat exchanger. In this way, a size of the water path substrate can match a size of the heat exchanger as much as possible. This miniaturizes the water-side component.

In some embodiments, all functional components of the refrigerant component are distributed at other positions of the refrigerant substrate other than a surface that is of the refrigerant substrate and that faces the heat exchanger. Because a second surface corresponds to the heat exchanger, all the functional components of the refrigerant component are distributed at the other positions of the refrigerant substrate other than the surface that is of the refrigerant substrate and that faces the heat exchanger. In this way, a size of the refrigerant substrate can match a size of the heat exchanger as much as possible. This miniaturizes the water-side component.

In some embodiments, the water path substrate is provided with an inner cavity, and all the functional components of the water-side component are mounted in the inner cavity and/or on a side that is of the water path substrate and that is away from the heat exchanger. First, this can facilitate miniaturization of the thermal management integrated module. In addition, because some functional components can be disposed inside the water path substrate, the plumbing in the water path substrate can be in a 3D architecture. This can effectively use three-dimensional space, reduce a size that is of the water path substrate and that is in a direction perpendicular to a first direction, and facilitate miniaturization of the water-side component.

In some embodiments, the water-side component, the heat exchanger, and the refrigerant component are sequentially arranged in a first direction. In the first direction, a projection that is of the heat exchanger and that is on the water path substrate is a first projection, and a projection that is of the heat exchanger and that is on the refrigerant substrate is a second projection. A distance between an edge of the first projection and an edge of the water path substrate is less than a first threshold, and/or a distance between an edge of the second projection and an edge of the refrigerant substrate is less than a second threshold. Because the edge of the first projection is adjacent to the edge of the water path substrate, the water path substrate can be fully miniaturized, and a size of the water path substrate is close to a size of the first projection of the heat exchanger. Because the edge of the second projection is adjacent to the edge of the refrigerant substrate, the refrigerant substrate can be fully miniaturized, and a size of the refrigerant substrate is close to a size of the second projection of the heat exchanger.

In some embodiments, the surface that is of the water path substrate and that faces the heat exchanger is a first surface, the surface that is of the refrigerant substrate and that faces the heat exchanger is a second surface, and an outer contour shape of the first surface is the same as an outer contour shape of the second surface. Because the outer contour shape of the first surface is the same as the outer contour shape of the second surface, the entire thermal management integrated module in this embodiment is more structured, so that miniaturization of the thermal management integrated module is facilitated, and mounting convenience can be improved.

In some embodiments, the water-side component, the heat exchanger, and the refrigerant component are sequentially arranged in the first direction. In the first direction, at least 75% of an area of a side that is of the water path substrate and that faces the heat exchanger directly faces the heat exchanger. In the first direction, at least 75% of an area of a side that is of the refrigerant substrate and that faces the heat exchanger directly faces the heat exchanger. A lower limit of a size of the thermal management integrated module is determined by the heat exchanger. Because the at least 75% of the area of the side that is of the water path substrate and that faces the heat exchanger directly faces the heat exchanger, the water path substrate can be appropriately miniaturized, so that the thermal management integrated module can be appropriately miniaturized. Because the at least 75% of the area of the side that is of the refrigerant substrate and that faces the heat exchanger directly faces the heat exchanger, the refrigerant substrate can be appropriately miniaturized, so that the thermal management integrated module can be appropriately miniaturized.

In some embodiments, at least a part of the heat exchanger is in contact with the water path substrate, and at least a part of the heat exchanger is in contact with the refrigerant substrate. Because two sides that are of a heat exchange component and that are in the first direction are respectively in contact with the water path substrate and the refrigerant substrate, it can be ensured that a distance between the water path substrate and the refrigerant substrate is short, and the gap space between the water path substrate and the refrigerant substrate is only used to accommodate the heat exchanger. This helps implement a small size of the entire thermal management integrated module.

In some embodiments, a water path port is disposed on the side that is of the water path substrate and that faces the heat exchanger, a water path connection port is disposed on the side that is of the heat exchanger and that faces the water path substrate, and the water path port is connected to the water path connection port. The water path port is located on the side that is of the water path substrate and that faces the heat exchanger, and the water path connection port is located on the side that is of the heat exchanger and that faces the water path substrate, to conveniently connect the water path substrate to the water path connection port. In addition, a length of a coolant hose that connects the water path substrate to the heat exchanger can be reduced, to facilitate miniaturization of the thermal management integrated module.

In some embodiments, the water path port is connected to the water path connection port through a flexible coolant hose. Because the water path port is connected to the water path connection port through the flexible coolant hose, when the water path substrate deforms, hard contact does not occur on the water path port and the water path connection port, and the water path port and the water path connection port are not damaged, to avoid a leakage from the water path port and the water path connection port.

In some embodiments, in all functional components of the water-side component, some functional components are water pumps, some functional components are temperature sensors, and the remaining functional components are multi-port valves. Because the water pump and the multi-port valve are small in size, a miniaturization design of the water-side component can be facilitated.

In some embodiments, the water path substrate is provided with an inner cavity. The multi-port valve is located in the inner cavity. A plurality of water connection ports of the multi-port valve correspondingly communicate with a plurality of plumbings of the water path substrate. Because at least a part of the multi-port valve is disposed inside the water path substrate, the plumbing in the water path substrate can be in a 3D three-dimensional architecture. This can effectively use three-dimensional space, reduce a size that is of the water path substrate and that is in a direction perpendicular to the first direction, and facilitate miniaturization of the water-side component.

In some embodiments, all functional components of the refrigerant component are mounted on a side that is of the refrigerant substrate and that is away from the heat exchange component. In all the functional components of the refrigerant component, some functional components are expansion valves, some functional components are solenoid valves, some functional components are check valves, some functional components are temperature sensors, and the remaining functional components are temperature and pressure sensors. Second functional components include only the expansion valve, the solenoid valve, the check valve, and the temperature and pressure sensor, and the expansion valve, the solenoid valve, the check valve, and the temperature and pressure sensor are all small in size. Therefore, the integrated thermal management integrated module has a small size. This facilitates miniaturization of the thermal management integrated module.

In some embodiments, the water path substrate and/or the refrigerant substrate each include/includes a fastening structure. The fastening structure is configured to fasten the thermal management integrated module in a use environment. The water path substrate and/or the refrigerant substrate may be fastened, by using the fastening structure, in the use environment in which the water path substrate and/or the refrigerant substrate need/needs to be fastened, so that the thermal management integrated module in this embodiment is fastened in a use environment in which the thermal management integrated module needs to be fastened.

In some embodiments, a first plumbing, several first functional ports communicating with the first plumbing, a second plumbing, and several second functional ports communicating with the second plumbing are formed on the refrigerant substrate. The several first functional ports are connected to the check valve, the temperature and pressure sensor, and the expansion valve. The several second functional ports are connected to the check valve, the solenoid valve, the temperature and pressure sensor, and the expansion valve.

In some embodiments, the heat exchanger includes a condensation heat exchange component and an evaporation heat exchange component. The condensation heat exchange component includes a condensation inlet and a condensation outlet. The condensation inlet communicates with the second plumbing. The condensation outlet communicates with the first plumbing. The evaporation heat exchange component includes an evaporation inlet and an evaporation outlet. The evaporation inlet communicates with the first plumbing. The evaporation outlet is configured to be connected to an access of a gas-liquid separator in the thermal management system.

In some embodiments, the heat exchanger includes two heat exchange components. The two heat exchange components are disposed in parallel between the water path substrate and the refrigerant substrate. An end face that is of each heat exchange component and that faces the water path substrate has a longer side and a shorter side. The surface that is of the water path substrate and that faces the heat exchanger has a first side and a second side.

The two heat exchange components are arranged in a second direction. The second direction is the same as an extension direction of the longer side. The first side corresponds to positions of the longer sides of the two heat exchange components. The second side of the water path substrate corresponds to a position of the shorter side of one of the heat exchange components.

In some embodiments, the heat exchanger includes two heat exchange components. The two heat exchange components are disposed in parallel between the water path substrate and the refrigerant substrate. An end face that is of each heat exchange component and that faces the water path substrate has a longer side and a shorter side. The surface that is of the water path substrate and that faces the heat exchanger has a first side and a second side. In this embodiment, a width of the water-side component in a direction of the second side can be reduced. The thermal management integrated module in this implementation is suitable for being mounted in a thin and long mounting environment.

The two heat exchange components are arranged in a third direction. The third direction is the same as an extension direction of the shorter side. The first side corresponds to positions of the shorter sides of the two heat exchange components. The second side of the water path substrate corresponds to a position of the longer side of one of the heat exchange components. In this embodiment, neither the first side nor the second side of the water path substrate is too large. The thermal management integrated module in this implementation is suitable for being mounted in a mounting environment with a length and a width that are similar to each other.

In some embodiments, the refrigerant component includes a second external connection port. The second external connection port is configured to be connected to a gas-liquid separator in the thermal management system through a coolant hose. The second external connection port is configured to be connected to the gas-liquid separator in the thermal management system through the coolant hose, so that a position of the thermal management integrated module in this embodiment can be decoupled from a position of the gas-liquid separator. This helps improve mounting environment adaptability of the gas-liquid separator and the thermal management integrated module, miniaturize the thermal management integrated module.

According to a second aspect, this application provides a thermal management system, including a water tank, a gas-liquid separator, and the thermal management integrated module according to any implementation of the first aspect. The thermal management integrated module is connected to the water tank and the gas-liquid separator through coolant hoses.

According to a third aspect, this application provides a vehicle, including a battery, a powertrain, and the foregoing thermal management system. The thermal management system is configured to perform thermal management on the battery and the powertrain.

According to a fourth aspect, this application provides an energy storage system, including an energy storage battery and the foregoing thermal management system. The thermal management system is configured to perform thermal management on the energy storage battery.

### BRIEF DESCRIPTION OF DRAWINGS

To describe the technical solutions in embodiments of the present invention or in the conventional technology more clearly, the following briefly introduces the accompanying drawings for describing embodiments or the conventional technology.
FIG. 1a is a diagram of a structure of a vehicle according to an embodiment of this application;
FIG. lb is an operating block diagram of a thermal management system of a vehicle according to an embodiment of this application;
FIG. 2 is an operating block diagram of a thermal management system of an energy storage system according to an embodiment of this application;
FIG. 3 is a diagram of a structure of a thermal management integrated module according to an embodiment of this application;
FIG. 4 is an exploded diagram of the thermal management integrated module in FIG. 3;
FIG. 5 is a diagram of a structure of a water-side component in the thermal management integrated module in FIG. 3;
FIG. 6 is a diagram of a structure of the water-side component in FIG. 5 from another perspective;
FIG. 7 is a diagram of a partial structure of the thermal management integrated module in FIG. 3;
FIG. 8 is a diagram of a partial structure of another structure of a thermal management integrated module according to an embodiment of this application;
FIG. 9 is a diagram of a partial structure of the water-side component in the thermal management integrated module in FIG. 3;
FIG. 10 is an exploded diagram of the partial structure of the water-side component in FIG. 9;
FIG. 11 is a diagram of a structure of a refrigerant component in the thermal management integrated module in FIG. 3;
FIG. 12 is a diagram of a structure of a refrigerant substrate in the refrigerant component in FIG. 11;
FIG. 13 is a diagram of a partial structure of the thermal management integrated module in FIG. 3;
FIG. 14 is a diagram of a working principle of a thermal management system according to an embodiment of this application; and
FIG. 15 shows a connection status of each water connection port when a multi-port valve is in three different modes.

### Reference numerals:

Z: first direction; X: second direction; Y: third direction; 1000: vehicle; 1: thermal management system; 11: thermal management integrated module; 12: water tank; 13: gas-liquid separator; 14: compressor; 2: thermal management object; 100: water-side component; 110: water path substrate; 111: first surface; 112: upper surface; 1121: first plane; 1122: second plane; 1123: third plane; 113: side surface; 115: first side; 116: second side; 117: plumbing; 118: first external connection port; 120: first functional component; 130: water path port; 140: water pump; 150: multi-port valve; 1501: inner cavity; 151: valve body; 1511: water connection port; 152: valve core; 1521: groove; 153: actuator; 200: refrigerant component; 210: refrigerant substrate; 211: second surface; 212: annular side panel; 213: coolant hose; 214: first plumbing; 215: second plumbing; 216: first functional port; 217: second functional port; 218: second external connection port; 220: second functional component; 221: expansion valve; 222: solenoid valve; 223: check valve; 224: temperature and pressure sensor; 230: refrigerant port; 300: heat exchanger; 301: first projection; 302: second projection; 310: water path connection port; 320: refrigerant connection port; 330: heat exchange component; 331: longer side; 332: shorter side; 340: condensation heat exchange component; 341: condensation inlet; 342: condensation outlet; 350: evaporation heat exchange component; 351: evaporation inlet; 352: evaporation outlet; and 400: fastening structure.

### DESCRIPTION OF EMBODIMENTS

The following first explains some terms in embodiments of this application.

In this specification, claims, and accompanying drawings of embodiments of this application, terms "first", "second", "third", "fourth", and the like are intended to distinguish similar objects but do not need to be used to describe a specific order or sequence. It should be understood that the data used in such a way is interchangeable in appropriate circumstances, so that embodiments of this application described herein can be implemented in orders except the order illustrated or described herein. In addition, terms "include", "contain", and any variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, product, or device.

In this specification, terms such as "perpendicular" and "parallel" are explained.

Perpendicularity: Perpendicularity defined in this application is not limited to an absolute perpendicular intersection (an included angle is 90 degrees) relationship, a non-absolute perpendicular intersection relationship caused by factors such as an assembly tolerance, a design tolerance, and a structural flatness is allowed, and an error within a small angle range is allowed. For example, a relationship within an assembly angle range of 80 degrees to 100 degrees may be understood as the perpendicular relationship.

Parallelism: Parallelism defined in this application is not limited to absolute parallelism. Parallel defined herein may be understood as basic parallelism, and non-absolute parallelism caused by factors such as an assembly tolerance, a design tolerance, and a structural flatness is allowed. The factors may cause a case in which a sliding cooperation part and a first door plate are not absolutely parallel, but this application also defines, as parallelism, the case in which the sliding cooperation part and the first door plate are not absolutely parallel.

It should be noted that the accompanying drawings in the following are diagrams, and specific shapes in the accompanying drawings are not specific shapes to be protected in this application.

An embodiment of this application provides a thermal management system. The thermal management system in this embodiment of this application is applicable to the vehicle-mounted and the energy storage field.

For example, the thermal management system in this embodiment of this application may be used in an electric vehicle in the vehicle-mounted, and the electric vehicle is a transportation means driven by an electric power module . The electric power module may include, for example, a power distribution unit (PDU), a microcontroller unit (MCU), a mapped diagnostic context (MDC), and a motor.

For another example, the thermal management system in embodiments of this application may be used in a photovoltaic system, a wind power system, and the like in the energy storage field.

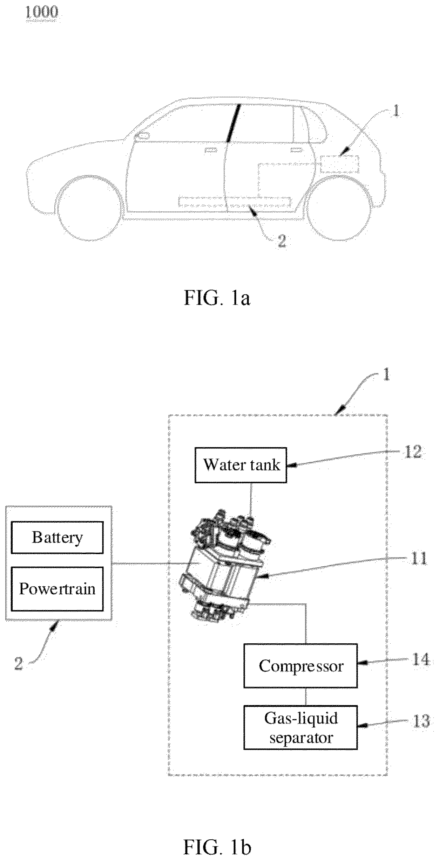

FIG. 1a is a diagram of a structure of a vehicle 1000 according to an embodiment of this application. FIG. lb is an operating block diagram of a thermal management system 1 of the vehicle 1000 according to an embodiment of this application.

Refer to FIG. la and FIG. lb. An embodiment of this application further provides the vehicle 1000. The vehicle 1000 includes the thermal management system 1 and a thermal management object 2. The thermal management system 1 is configured to perform thermal management on the thermal management object 2. It may be understood that positions of the thermal management object 2 and the thermal management system 1 in the figure are merely examples, and do not indicate that the thermal management object 2 and the thermal management system 1 are definitely at the positions shown in the figure. The thermal management object 2 and the thermal management system 1 may alternatively be disposed at other positions.

In some implementations, the thermal management object 2 includes one or more of a battery, a powertrain, and an electronic control module. For an electric vehicle, a battery is configured to provide most of electric energy required by the vehicle 1000. The powertrain is configured to provide power for the vehicle 1000. The powertrain may include a motor, a transmission, a transmission system, and an exhaust system. The electronic control module is an overall system including elements such as an electronic control unit (ECU), a harness, and a sensor that are of the vehicle. The electronic control module may perform refined adjustment, control, and management on an automotive engine, the transmission, braking, and security control of the vehicle, to ensure smooth traveling and stability of the vehicle in various complex driving scenarios. The electronic control module of the vehicle is an important part of the vehicle, and has high requirements for matching, debugging, maintenance, upgrading, and the like of an electronic device.

The thermal management system 1 is configured to monitor and control a temperature of the vehicle 1000, and maintain a normal operating temperature range of each part (for example, the battery, the powertrain, the electronic control module, and an interior of the vehicle) of the vehicle 1000, to improve performance, efficiency, and comfort of the vehicle 1000.

The thermal management system 1 includes a thermal management integrated module 11, a water tank 12, and a gas-liquid separator 13.

The water tank 12 is configured to provide circulated water for the thermal management integrated module 11. Because the water tank 12 is independent of the thermal management integrated module 11 and is connected to the thermal management integrated module 11 through a coolant hose, a position of the water tank 12 can be decoupled from a position of the thermal management integrated module 11. For example, the water tank 12 is placed at a higher position, and the thermal management integrated module 11 is placed at a lower position than that of the water tank 12. This can improve use performance of the water tank 12 and the thermal management integrated module 11, and further enable the thermal management integrated module 11 in this embodiment to be adapted to different environments, for example, the thermal management integrated module 11 can be used in both a vehicle and an energy storage system. In addition, the water tank 12 and the thermal management integrated module 11 are separately and independently disposed, so that the thermal management integrated module 11 is not affected by the water tank 12 with a large size. This facilitates miniaturization of the thermal management integrated module 11.

Similarly, a component with a large volume like the gas-liquid separator 13 may also be independent of the thermal management integrated module 11, and is connected to the thermal management integrated module 11 through a coolant hose, to facilitate miniaturization of the thermal management integrated module 11.

In some implementations, a compressor 14 in the thermal management system 1 may also be disposed independently of the thermal management integrated module 11. Certainly, in some implementations, the compressor 14 may alternatively be integrated into the thermal management integrated module 11.

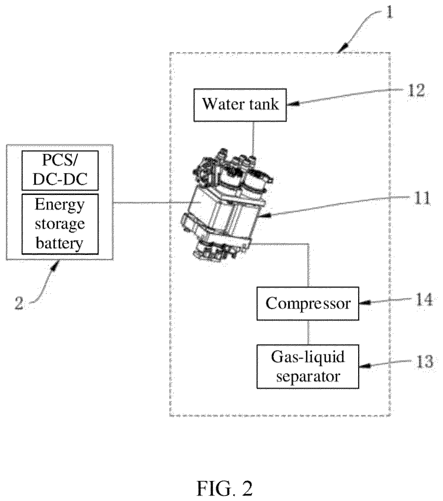

FIG. 2 is an operating block diagram of a thermal management system 1 of an energy storage system according to an embodiment of this application.

Refer to FIG. 2. The energy storage system includes the thermal management system 1 and the thermal management object 2. The thermal management system 1 includes a thermal management integrated module 11, a water tank 12, and a gas-liquid separator 13. For the thermal management integrated module 11, the water tank 12, and the gas-liquid separator 13, refer to the embodiment in FIG. lb. Details are not described herein again. The thermal management object 2 in this embodiment is an energy storage battery, a power control system (PCS), a DC-DC converter, and the like.

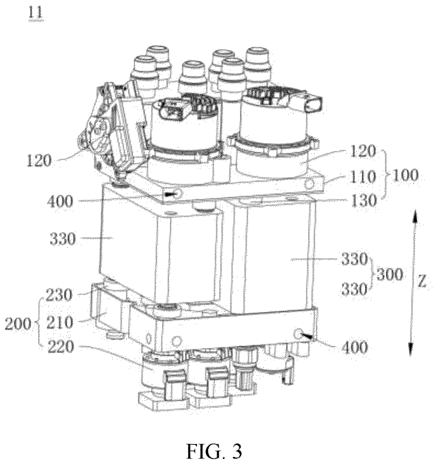

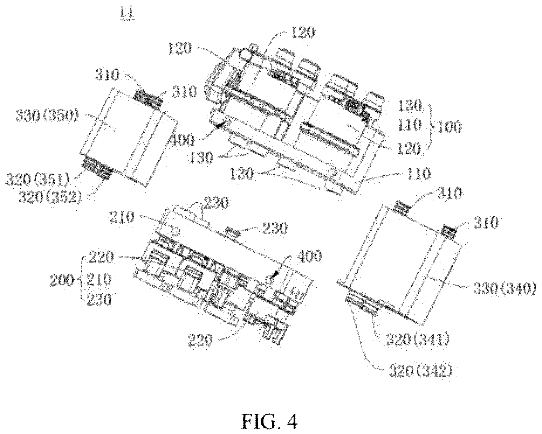

FIG. 3 is a diagram of a structure of a thermal management integrated module 11 according to an embodiment of this application. FIG. 4 is an exploded diagram of the thermal management integrated module 11 in FIG. 3. The thermal management integrated module 11 in this embodiment may be used in the thermal management systems 1 in embodiments in FIG. lb and FIG. 2, or may be used in another thermal management system 1, for example, thermal management systems 1 in the electronic and medical fields.

Refer to FIG. 3 and FIG. 4. The thermal management integrated module 11 includes a water-side component 100, a refrigerant component 200, and a heat exchanger 300.

The water-side component 100 in this embodiment is mainly configured to adjust and control flowing of a first medium in the system, to ensure normal operation of a device and temperature control. For example, the first medium in the water-side component 100 may flow to positions such as a battery, a powertrain, and a control unit, to implement temperature control and adjustment on the battery, the powertrain, the control unit, and the like.

The refrigerant component 200 in this embodiment is mainly configured to control a refrigerant to circulate in the system, to implement temperature adjustment through heat absorption and heat release.

A main function of the heat exchanger 300 in this embodiment is to implement heat exchange. For example, in some implementations, the heat exchanger 300 may be a condenser In some implementations, the heat exchanger 300 may alternatively be an evaporator. In some implementations, the heat exchanger 300 may alternatively include both a condenser and an evaporator.

The water-side component 100 and the refrigerant component 200 are separately connected to the heat exchanger 300, so that heat exchange between the first medium (for example, water) flowing from the water-side component 100 to the heat exchanger 300 and a second medium (for example, a refrigerant) flowing from the refrigerant component 200 to the heat exchanger 300 is implemented by using the heat exchanger 300.

The water-side component 100 and the refrigerant component 200 are respectively located on two opposite sides of the heat exchanger 300, so that the water-side component 100, the refrigerant component 200, and the heat exchanger 300 are disposed in a "sandwich" architecture. In comparison with a solution in which a heat exchanger 300 is integrated on a side that is of a refrigerant component 200 and that is away from a water-side component 100, in this application, a size of the refrigerant component 200 can be reduced, and connection stability of functional components of the refrigerant component 200 can further be improved.

In some embodiments, the water-side component 100 includes a water path substrate 110 and several functional components located on the water path substrate 110. For ease of description, the functional components of the water-side component 100 are a first functional component 120. The refrigerant component 200 includes a refrigerant substrate 210 and several functional components located on the refrigerant substrate 210. For ease of description, the functional component of the refrigerant components 200 are a second functional component 220. The heat exchanger 300 is located in a gap space formed by the water path substrate 110 and the refrigerant substrate 210, to form the "sandwich" architecture. This can facilitate miniaturization of the refrigerant substrate 210, save a material of the refrigerant substrate 210, and improve strength of the refrigerant substrate 210.

In some implementations, the water path substrate 110 directly faces the refrigerant substrate 210 in a first direction Z. The first direction Z is also a direction in which the water-side component 100, the heat exchanger 300, and the refrigerant component 200 are sequentially arranged. In comparison with a solution in which the heat exchanger 300 is fastened to a side that is of the refrigerant substrate 210 and that is away from the water path substrate 110, in this embodiment of this application, the refrigerant substrate 210 does not need to be provided with a through hole for placing the heat exchanger 300, to save a base material for manufacturing the refrigerant substrate 210, and reduce costs. In addition, because the refrigerant substrate 210 is not provided with a through hole for placing the heat exchanger 300, strength of the refrigerant substrate 210 is enhanced, and a size of the refrigerant substrate 210 is reduced. The refrigerant substrate 210 is miniaturized, so that the strength of the refrigerant substrate 210 can also be improved.

In some implementations, a water path port 130 is disposed on a side that is of the water path substrate 110 and that faces the heat exchanger 300, a water path connection port 310 is disposed on a side that is of the heat exchanger 300 and that faces the heat exchanger 300, and the water path substrate 110 is connected to the water path connection port 310 of the heat exchanger 300 through the water path port 130. The water path port 130 is located on the side that is of the water path substrate 110 and that faces the heat exchanger 300, and the water path connection port 310 is located on the side that is of the heat exchanger 300 and that faces the water path substrate 110, to conveniently connect the water path substrate 110 to the water path connection port 310. In addition, a length of a coolant hose 213 that connects the water path substrate 110 to the heat exchanger 300 can be reduced, to facilitate miniaturization of the thermal management integrated module 11.

In some implementations, the water path port 130 is directly connected to the water path connection port 310, and the water path substrate 110 communicates with the heat exchanger 300 through the water path port 130 and the water path connection port 310, or the water path substrate 110 may be fastened to the heat exchanger 300 through the water path port 130 and the water path connection port 310.

In some implementations, the water path port 130 is connected to the water path connection port 310 through a flexible coolant hose (not shown in the figure). Because the water path port 130 is connected to the water path connection port 310 through the flexible coolant hose, when the water path substrate 110 deforms, hard contact does not occur on the water path port 130 and the water path connection port 310, and the water path port 130 and the water path connection port 310 are not damaged, to avoid a leakage from the water path port 130 and the water path connection port 310.

It may be understood that, in this embodiment of this application, the water-side component 100 and the heat exchanger 300 may be detached from each other and may be detachable, and may be connected through the flexible coolant hose after being detached. The water-side component 100 and the heat exchanger 300 may be connected through the flexible coolant hose after being detached. A detachable connection structure between the water-side component 100 and the heat exchanger 300 can enable the thermal management integrated module 11 provided in this embodiment of this application to more flexibly match different use scenarios.

In some implementations, the water path port 130 and the water path substrate 110 are integrated. In some implementations, the water path port 130 and the water path substrate 110 are spliced.

In some implementations, the water path connection port 310 and a housing of the heat exchanger 300 are integrated. In some implementations, the water path connection port 310 and the heat exchanger 300 are spliced.

In some implementations, a refrigerant port 230 is disposed on a side that is of the refrigerant substrate 210 and that faces the heat exchanger 300, a refrigerant connection port 320 is disposed on a side that is of the heat exchanger 300 and that faces the refrigerant substrate 210, and the refrigerant substrate 210 is connected to the refrigerant connection port 320 of the heat exchanger 300 through the refrigerant port 230. The refrigerant port 230 is located on the side that is of the refrigerant substrate 210 and that faces the heat exchanger 300, and the refrigerant connection port 320 is located on the side that is of the heat exchanger 300 and that faces the refrigerant substrate 210, to conveniently connect the refrigerant substrate 210 to the refrigerant connection port 320. In addition, the length of the coolant hose 213 that connects the refrigerant substrate 210 to the heat exchanger 300 can be reduced, to facilitate miniaturization of the thermal management integrated module 11.

In some implementations, the refrigerant port 230 is directly connected to the refrigerant connection port 320, and the refrigerant substrate 210 communicates with the heat exchanger 300 through the refrigerant port 230 and the refrigerant connection port 320, or the refrigerant substrate 210 may be fastened to heat exchanger 300 through the refrigerant port 230 and the refrigerant connection port 320.

In some implementations, the refrigerant port 230 is connected to the refrigerant connection port 320 through a flexible coolant hose. Because the refrigerant port 230 is connected to the refrigerant connection port 320 through the flexible coolant hose, when the refrigerant substrate 210 deforms, hard contact does not occur on the refrigerant port 230 and the refrigerant connection port 320, and the refrigerant port 230 and the refrigerant connection port 320 are not damaged, to avoid a leakage from the refrigerant port 230 and the refrigerant connection port 320.

In some implementations, the refrigerant port 230 and the refrigerant connection port 320 may alternatively be made of a flexible material. The refrigerant port 230 communicates with a plumbing in the refrigerant substrate 210. The refrigerant connection port 320 communicates with a plumbing in the heat exchanger 300. Certainly, in some other implementations, the refrigerant port 230 and the refrigerant connection port 320 may alternatively be made of a rigid material.

In some implementations, the refrigerant port 230 and the refrigerant substrate 210 are integrated. In some implementations, the refrigerant port 230 and the refrigerant substrate 210 are spliced.

In some implementations, the refrigerant connection port 320 and the housing of the heat exchanger 300 are integrated. In some implementations, the refrigerant connection port 320 and the heat exchanger 300 are spliced.

In some implementations, at least a part of the heat exchanger 300 is in contact with the water path substrate 110, and at least a part of the heat exchanger 300 is in contact with the refrigerant substrate 210. Because two sides that are of a heat exchange component 330 and that are in the first direction Z are respectively in contact with the water path substrate 110 and the refrigerant substrate 210, it can be ensured that a distance between the water path substrate 110 and the refrigerant substrate 210 is short, and the gap space between the water path substrate 110 and the refrigerant substrate 210 is only used to accommodate the heat exchanger 300. This helps implement a small size of the entire thermal management integrated module 11.

It may be understood that, in some implementations, the heat exchanger 300 is at least partially in contact with the refrigerant substrate 210, or the heat exchanger 300 is at least partially in contact with the water path substrate 110.

It may be understood that, in this embodiment of this application, the refrigerant component 200 and the heat exchanger 300 may be detached from each other and may be detachable, and may be connected through the flexible coolant hose after being detached. A detachable connection structure between the refrigerant component 200 and the heat exchanger 300 can enable the thermal management integrated module 11 provided in this embodiment of this application to more flexibly match different use scenarios.

In some implementations, the water path substrate 110 and/or the refrigerant substrate 210 each include/includes a fastening structure 400. The fastening structure 400 is configured to fasten the thermal management integrated module 11 in a use environment. The water path substrate 110 and/or the refrigerant substrate 210 may be fastened, by using the fastening structure 400, in the use environment in which the water path substrate 110 and/or the refrigerant substrate 210 need/needs to be fastened, so that the thermal management integrated module 11 in this embodiment is fastened in a use environment in which the heat management integrated module 11 needs to be fastened.

In some implementations, the fastening structure 400 is a fastening through hole with which the water path substrate 110 and/or the refrigerant substrate 210 are/is provided.

In some implementations, a side face of the water path substrate 110 and/or a side face of the refrigerant substrate 210 is provided with the fastening through hole, and the side face of the water path substrate 110 and/or the side face of the refrigerant substrate 210 is a face adjacent to a face that faces the heat exchanger 300, so that interference in integration of the functional component and the heat exchanger 300 is not occurred.

It may be understood that, in some other implementations, the water path substrate 110 and/or the refrigerant substrate 210 may alternatively be fastened, by using the heat exchanger 300, at a position at which the water path substrate 110 and/or the refrigerant substrate 210 need/needs to be fastened.

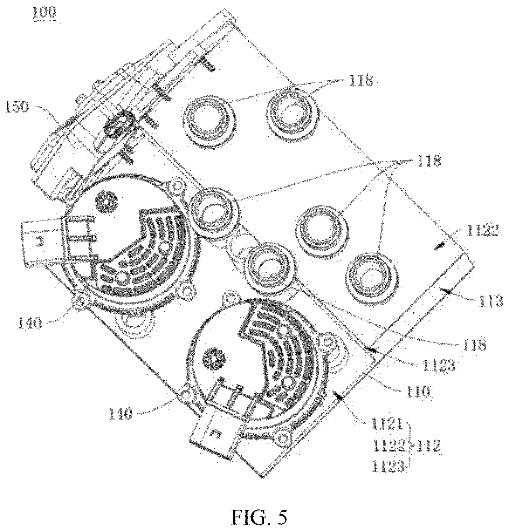

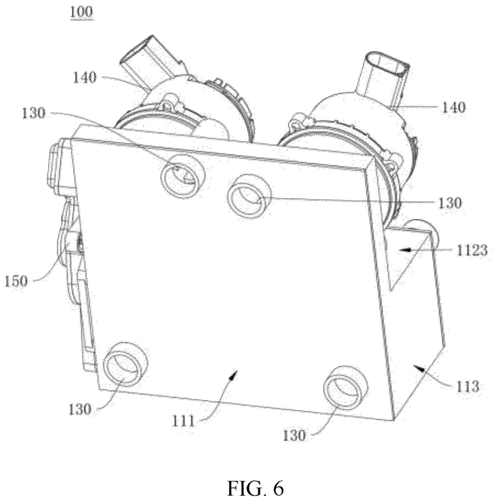

FIG. 5 is a diagram of a structure of the water-side component 100 in the thermal management integrated module 11 in FIG. 3. FIG. 6 is a diagram of a structure of the water-side component 100 in FIG. 5 from another perspective.

Refer to FIG. 5 and FIG. 6. In some embodiments, the water path substrate 110 includes a first surface 111 facing the heat exchanger 300, and all first functional components 120 of the water-side component 100 are distributed at other positions of the water path substrate 110 other than the first surface 111. The first surface 111 corresponds to the heat exchanger 300, so that a size of the first surface 111 of the water path substrate 110 matches a size of the heat exchanger 300 as much as possible. This miniaturizes the water-side component 100.

In some implementations, the first surface 111 is a plane. It may be understood that a curved surface with a small radian also belongs to the plane in this implementation. It may be understood that, in some other implementations, the first surface 111 may alternatively be a curved surface.

In some implementations, the water path substrate 110 further includes an upper surface 112 away from the heat exchanger 300 and a side surface 113 configured to connect the first surface 111 to the upper surface 112. It may be understood that, in this implementation, words such as "upper" and "side" do not limit orientations, and are similar to words such as "first" and "second" for distinguishing names.

In some implementations, the upper surface 112 is a plane, the water path substrate 110 is a sheet-shaped plate, and all first functional components 120 are disposed on the upper surface 112.

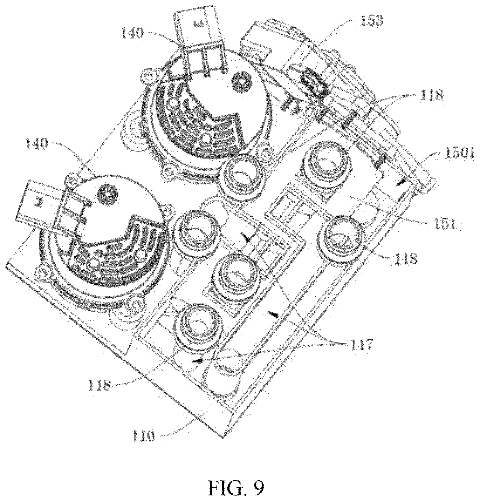

In some implementations, the upper surface 112 includes a first plane 1121, a second plane 1122, and a third plane 1123 that connects the first plane 1121 to the second plane 1122. The first plane 1121 and the second plane 1122 are parallel and do not overlap in the first direction Z. The third plane 1123 is perpendicular to the first plane 1121. In this implementation, thickness of a part corresponding to the first plane 1121 of the water path substrate 110 is less than thickness of a part corresponding to the second plane 1122 of the water path substrate 110, and the water path substrate 110 has an inner cavity 1501 (as shown in FIG. 9 below). All first functional components 120 are disposed on the upper surface 112 and/or the inner cavity 1501.

In some implementations, in all first functional components 120, some first functional components 120 are water pumps 140, some first functional components 120 are temperature sensors, and the remaining first functional components 120 are multi-port valves 150. Because the water pump 140 and the multi-port valve 150 are small in size, a miniaturization design of the water-side component 100 can be facilitated.

The water pump 140 is distributed on the first plane 1121, and at least a part of the multi-port valve 150 is disposed at a position that is in the inner cavity 1501 and that corresponds to the second plane 1122. Because at least a part of the multi-port valve 150 is disposed inside the water path substrate 110, the plumbing in the water path substrate 110 can be in a 3D three-dimensional architecture. This can effectively use three-dimensional space, reduce a size that is of the water path substrate 110 and that is in a direction perpendicular to the first direction Z, and facilitate miniaturization of the water-side component 100.

It may be understood that, in some other implementations, the first functional components 120 may further include another component, for example, may further integrate a temperature sensor, a water level switch, a water tank 12, a controller of the water pump 140, a valve of the water pump 140, a pulser, or an overflow valve.

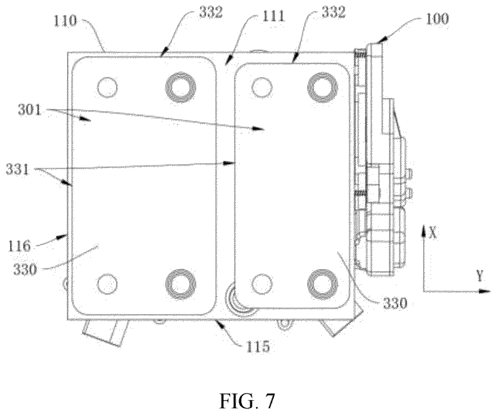

FIG. 7 is a diagram of a partial structure of the thermal management integrated module 11 in FIG. 3.

Refer to FIG. 7. In the first direction Z, a projection that is of the heat exchanger 300 and that is on the water path substrate 110 is a first projection 301. A distance between an edge of the first projection 301 and an edge of the water path substrate 110 is less than a first threshold. Specifically, the distance between the edge of the first projection 301 and the edge of the water path substrate 110 is a distance perpendicular to the first direction Z. It should be noted that, that a distance between an edge of the first projection 301 and an edge of the water path substrate 110 is less than a first threshold may be understood as that the edge of the first projection 301 is adjacent to the edge of the water path substrate 110. Because the edge of the first projection 301 is adjacent to the edge of the water path substrate 110, the water path substrate 110 can be fully miniaturized, and a size of the water path substrate 110 is close to a size of the first projection 301 of the heat exchanger 300. It may be understood that, "adjacent" in this embodiment means that the side that is of the water path substrate 110 and that faces the heat exchanger 300 is fully occupied by the heat exchanger 300, and no other components are disposed. It may be understood that, in some implementations, an outer contour size of the first projection 301 may be slightly greater than a contour size of the edge of the water path substrate 110. In some implementations, the outer contour size of the first projection 301 may be slightly less than the contour size of the edge of the water path substrate 110. In some implementations, the outer contour size of the first projection 301 may alternatively be the same as the contour size of the edge of the water path substrate 110. In this case, the first threshold is 0. It may be understood that a value of the first threshold may change based on an actual use environment. For example, when the thermal management integrated module 11 is used in a vehicle, because a size of the thermal management integrated module 11 is small, the first threshold may be correspondingly large. In some use environments, when the size of the thermal management integrated module 11 is small, the first threshold may be small.

It may be understood that, when the heat exchanger 300 includes two or more heat exchange components 330, the first projection 301 means a contour of an outermost side of the entire heat exchanger 300 including the two or more heat exchange components 330.

In some implementations, the projection that is of the heat exchanger 300 and that is on the water path substrate 110 is a projection on the first surface 111.

In some implementations, in the first direction Z, at least 75% of an area of the side that is of the water path substrate 110 and that faces the heat exchanger 300 directly faces the heat exchanger 300, so that the entire water path substrate 110 is subj ected to a more even force, and a large difference between forces applied to different positions is not likely to occur. This can effectively reduce a torsional resistance capability of the water path substrate 110, and improve torsional rigidity and structural strength of the water path substrate 110. In addition, a lower limit of a size of the thermal management integrated module 11 is determined by the heat exchanger 300. Because the at least 75% of the area of the side that is of the water path substrate 110 and that faces the heat exchanger 300 directly faces the heat exchanger 300, the water path substrate 110 is appropriately miniaturized, so that the thermal management integrated module 11 can be appropriately miniaturized. It should be noted that, in this implementation, the area of the side that is of the water path substrate 110 and that faces the heat exchanger 300 is an area of an outer contour

In some implementations, the heat exchanger 300 includes two heat exchange components 330. The two heat exchange components 330 are disposed in parallel between the water path substrate 110 and the refrigerant substrate 210. An end face that is of each heat exchange component 330 and that faces the water path substrate 110 has a longer side 331 and a shorter side 332. The surface (the first surface 111) that is of the water path substrate 110 and that faces the heat exchanger 300 has a first side 115 and a second side 116. It may be understood that, that the two heat exchange components 330 are disposed in parallel between the water path substrate 110 and the refrigerant substrate 210 means that the two heat exchange components 330 are arranged in a direction perpendicular to the first direction Z instead of the first direction Z.

The two heat exchange components 330 are arranged in a third direction Y The third direction Y is the same as an extension direction of the shorter side 332. The first side 115 corresponds to positions of the shorter sides 332 of the two heat exchange components 330. The second side 116 of the water path substrate 110 corresponds to a position of the longer side 331 of one of the heat exchange components 330. In this implementation, neither the first side 115 nor the second side 116 of the water path substrate 110 is too large. The thermal management integrated module 11 in this implementation is suitable for being mounted in a mounting environment with a length and a width that are similar to each other.

In some implementations, the third direction Y is perpendicular to the first direction Z.

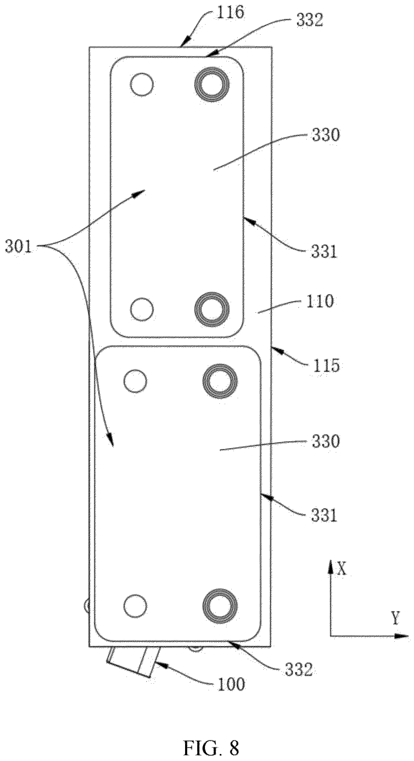

FIG. 8 is a diagram of a partial structure of another structure of the thermal management integrated module 11 according to an embodiment of this application. A main difference between this embodiment and the embodiment in FIG. 7 is that the two heat exchange components 330 are arranged in a second direction X. The second direction X is the same as an extension direction of the longer side 331. The first side 115 corresponds to positions of the longer sides 331 of the two heat exchange components 330. The second side 116 of the water path substrate 110 corresponds to a position of the shorter side 332 of one of the heat exchange components 330. In this implementation, a width of the water-side component 100 in a direction of the second side 116 can be reduced. The thermal management integrated module 11 in this implementation is suitable for being mounted in a thin and long mounting environment. For the first side 115, the second side 116, the longer side 331, the shorter side 332, and the like, refer to the embodiment in FIG. 7. Details are not described herein again.

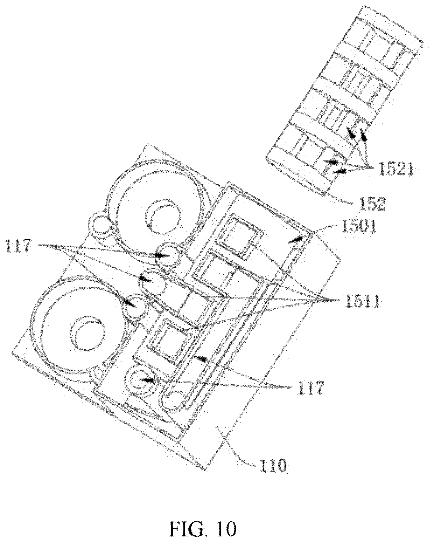

FIG. 9 is a diagram of a partial structure of the water-side component 100 in the thermal management integrated module 11 in FIG. 3. FIG. 10 is an exploded diagram of the partial structure of the water-side component 100 in FIG. 9.

Refer to FIG. 9 and FIG. 10. In some embodiments, a plurality of plumbings 117 are formed in the water path substrate 110. Some plumbings 117 are configured to communicate with the water path port 130. Some plumbings 117 are configured to communicate with an external connection port disposed on the water path substrate 110. For ease of description, the external connection port on the water path substrate 110 is set as a first external connection port 118. In some implementations, there are a plurality of first external connection ports 118.

In some implementations, some of the plurality of first external connection ports 118 are configured to be connected to the water tank 12 in the thermal management system 1. Specifically, the water tank 12 may communicate with the first external connection port 118 through a coolant hose, so that the water tank 12 and the thermal management integrated module 11 cooperate with each other in functions and are decoupled from each other in positions, to improve use performance of the water tank 12 and the thermal management integrated module 11. Some of the plurality of first external connection ports 118 are configured to connect to different thermal management objects 2. Some of the plurality of first external connection ports 118 are configured to connect to the water pump 140.

In some implementations, some of the plurality of first external connection ports 118 may be further connected to a radiator in the thermal management system 1.

In some implementations, the multi-port valve 150 includes a valve body 151, a valve core 152, and an actuator 153. The valve core 152 is disposed in the valve body 151 and can rotate relative to the valve body 151. The actuator 153 is configured to drive the valve core 152 to rotate relative to the valve body 151.

Several grooves 1521 are provided on the valve core 152. The valve body 151 is sleeved on the valve core 152, to seal the several grooves 1521 to form several channels. Specifically, some of the several grooves 1521 communicate with each other, so that the first medium can flow in the grooves 1521 that communicate with each other.

In some implementations, some grooves 1521 that communicate with each other are adjacent, and some grooves 1521 that communicate with each other are opposite.

A plurality of water connection ports 1511 are provided on the valve body 151. When the actuator 153 drives the valve core 152 to rotate at different positions, the plurality of ports may be correspondingly connected to different channels, and the water connection ports 1511 correspondingly communicate with the plurality of plumbings 117 in the water path substrate 110.

In some implementations, the multi-port valve 150 is an eight-port valve, and there are eight water connection ports 1511. In some implementations, there are nine water connection ports 1511. For ease of description, the nine water connection ports 1511 are respectively set as a port 1, a port 2, a port 3, a port 4, a port 6, a port 7, a port 8, a port 9, and a port 5. The port 5 is a proportionally adjustable port. Certainly, in some implementations, the multi-port valve 150 may alternatively be a three-port valve, a four-port valve, or another multi-port valve 150, and there may be one or more multi-port valves 150.

In some implementations, the valve body 151 and the water path substrate 110 are integrated.

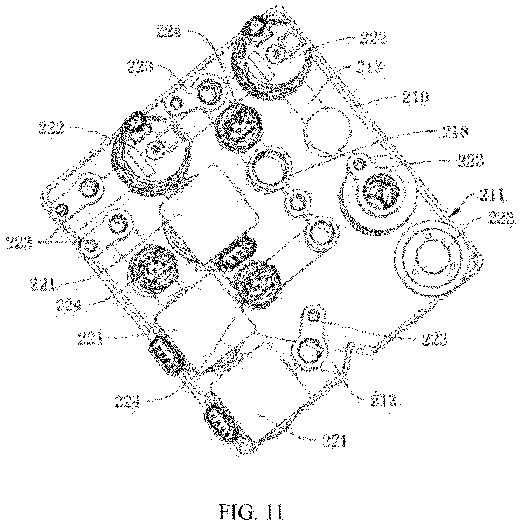

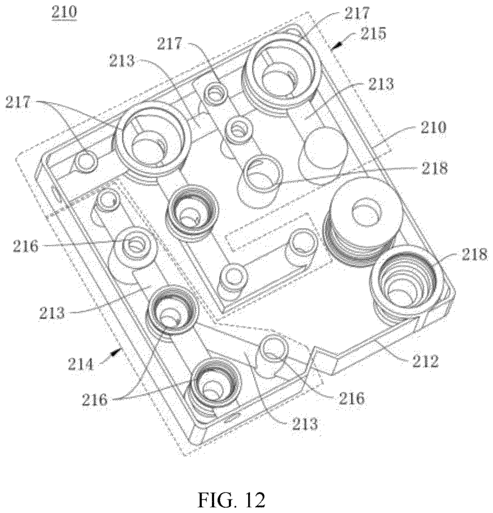

FIG. 11 is a diagram of a structure of the refrigerant component 200 in the thermal management integrated module 11 in FIG. 3. FIG. 12 is a diagram of a structure of the refrigerant substrate 210 in the refrigerant component 200 in FIG. 11.

Refer to FIG. 11 and FIG. 12. In some embodiments, the refrigerant substrate 210 includes a second surface 211 facing the heat exchanger 300. All second functional components 220 of the refrigerant component 200 are distributed at other positions of the refrigerant substrate 210 other than the second surface 211. The second surface 211 is configured to correspond to the heat exchanger 300, so that a size of the second surface 211 of the refrigerant substrate 210 matches the size of the heat exchanger 300 as much as possible. This miniaturizes the refrigerant component 200. It should be noted that the second surface 211 in this embodiment is a largest surface enclosed by an outer contour of the side that is of the refrigerant substrate 210 and that faces the heat exchanger 300, and an internal hollow position also belongs to the second surface 211.

In some implementations, the refrigerant substrate 210 includes an annular side panel 212 and several coolant hoses 213 fastened to an accommodation cavity enclosed by the annular side panel 212, and the several coolant hoses 213 communicate with each other to form plumbings 117 of the refrigerant substrate 210.

In some implementations, the several coolant hoses 213 communicate with each other to form a first plumbing 214 and a second plumbing 215. The refrigerant substrate 210 further includes several first functional ports 216 that are fastened to the coolant hoses 213 and communicate with the first plumbing 214, and several second functional ports 217 that are fastened to the coolant hoses 213 and communicate with the second plumbing 215.

In some implementations, all second functional components 220 of the refrigerant component 200 are mounted on a side that is of the refrigerant substrate 210 and that is away from the heat exchange component 330. Specifically, all second functional ports 217 are located on the side that is of the refrigerant substrate 210 and that is away from the heat exchanger 300, and all second functional components 220 are correspondingly connected to the second functional ports 217.

In all second functional components 220, some second functional components 220 are expansion valves 221, some second functional components 220 are solenoid valves 222, some second functional components 220 are check valves 223, some second functional components 220 are temperature sensors, and the remaining functional components are temperature and pressure sensors 224. The second functional components 220 include only the expansion valve 221, the solenoid valve 222, the check valve 223, and the temperature and pressure sensor 224, and the expansion valve 221, the solenoid valve 222, the check valve 223, and the temperature and pressure sensor 224 are all small in size. Therefore, the integrated thermal management integrated module 11 has a small size. This facilitates miniaturization of the thermal management integrated module 11.

It may be understood that, in some other implementations, the second functional components 220 may further include another component with a small size, for example, a gate valve, a shut-off valve, an exhaust valve, and a trap valve.

In some implementations, the several first functional ports 216 are connected to a check valve 223, a temperature and pressure sensor 224, and an expansion valve 221, and the several second functional ports 217 are connected to a check valve 223, a solenoid valve 222, a temperature and pressure sensor 224, and an expansion valve 221. In some implementations, there are two refrigerant ports 230. The two refrigerant ports 230 respectively communicate with the first plumbing 214 and the second plumbing 215. In this implementation, because the two refrigerant ports 230 respectively communicate with the first plumbing 214 and the second plumbing 215, and the two refrigerant ports 230 communicate with the heat exchanger 300, the first plumbing 214 and the second plumbing 215 form a path by using the heat exchanger 300.

Refer to some implementations in FIG. 4, FIG. 11, and FIG. 12. The heat exchanger 300 includes two heat exchange components 330. The two heat exchange components 330 are respectively a condensation heat exchange component 340 and an evaporation heat exchange component 350. The condensation heat exchange component 340 includes a condensation inlet 341 and a condensation outlet 342. The condensation inlet 341 communicates with the second plumbing 215. The condensation outlet 342 communicates with the first plumbing 214. The evaporation heat exchange component 350 includes an evaporation inlet 351 and an evaporation outlet 352. The evaporation inlet 351 communicates with the first plumbing 214. The evaporation outlet 352 is configured to be connected to an access of the gas-liquid separator 13 in the thermal management system 1. Specifically, the refrigerant substrate 210 further includes a second external connection port 218. The evaporation outlet 352 communicates with the second external connection port 218, and then is connected to the gas-liquid separator 13 in the thermal management system 1 through the second external connection port 218. Specifically, the second external connection port 218 may be connected to the gas-liquid separator 13 in the thermal management system 1 through a coolant hose.

In some implementations, the second external connection port 218 includes a refrigerant inlet and a refrigerant outlet. The refrigerant inlet communicates with the second plumbing 215. The refrigerant outlet is connected to the gas-liquid separator 13 in the thermal management system 1 through the coolant hose.

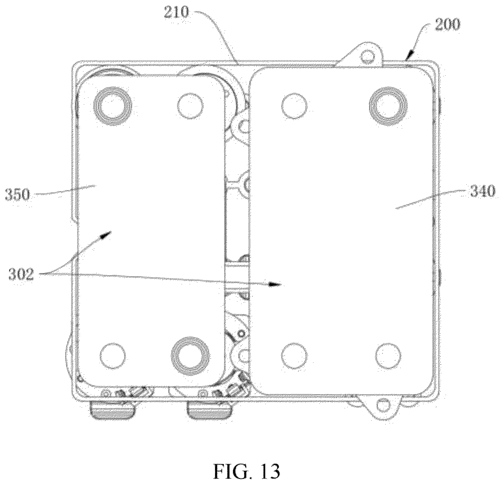

FIG. 13 is a diagram of a partial structure of the thermal management integrated module 11 in FIG. 3.

Refer to FIG. 13. In the first direction Z, a projection that is of the heat exchanger 300 and that is on the refrigerant substrate 210 is a second projection 302. A distance between an edge of the second projection 302 and an edge of the refrigerant substrate 210 is less than a second threshold. Specifically, the distance between the edge of the second projection 302 and the edge of the refrigerant substrate 210 is a distance perpendicular to the first direction Z. It should be noted that, that a distance between an edge of the second projection 302 and an edge of the refrigerant substrate 210 is less than a second threshold may be understood as that the edge of the second projection 302 is adjacent to the edge of the refrigerant substrate 210. Because the edge of the second projection 302 is adjacent to the edge of the refrigerant substrate 210, the refrigerant substrate 210 can be fully miniaturized, and a size of the refrigerant substrate 210 is close to a size of the second projection 302 of the heat exchanger 300. It may be understood that, "adjacent" in this embodiment means that the side that is of the refrigerant substrate 210 and that faces the heat exchanger 300 is fully occupied by the heat exchanger 300, and no other components are disposed. It may be understood that, in some implementations, an outer contour size of the second projection 302 may be slightly greater than a contour size of the edge of the refrigerant substrate 210. In some implementations, the outer contour size of the second projection 302 may be slightly less than the contour size of the edge of the refrigerant substrate 210. In some implementations, the outer contour size of the second projection 302 may alternatively be the same as the contour size of the edge of the refrigerant substrate 210. In this case, the second threshold is 0. It may be understood that a value of the second threshold may change based on an actual use environment. For example, when the thermal management integrated module 11 is used in the vehicle, because the size of the thermal management integrated module 11 is small, the second threshold may be correspondingly large. In some use environments, when the size of the thermal management integrated module 11 is small, the second threshold may be small.

It may be understood that, when the heat exchanger 300 includes two or more heat exchange components 330, the second projection 302 means a contour of an outermost side of the entire heat exchanger 300 including the two or more heat exchange components 330.

In some implementations, in the first direction Z, at least 75% of an area of the side that is of the refrigerant substrate 210 and that faces the heat exchanger 300 directly faces the heat exchanger 300, so that the entire refrigerant substrate 210 is subjected to a more even force, and a large difference between forces applied to different positions is not likely to occur. This can effectively reduce a torsional resistance capability of the refrigerant substrate 210, and improve torsional rigidity and structural strength of the refrigerant substrate 210. In addition, the lower limit of the size of the thermal management integrated module 11 is determined by the heat exchanger 300. Because the at least 75% of the area of the side that is of the refrigerant substrate 210 and that faces the heat exchanger 300 directly faces the heat exchanger 300, the refrigerant substrate 210 is appropriately miniaturized, so that the thermal management integrated module 11 can be appropriately miniaturized. It should be noted that, in this implementation, the area of the side that is of the refrigerant substrate 210 and that faces the heat exchanger 300 is an area of an outer contour

Refer to FIG. 3, FIG. 7, and FIG. 13. In some implementations, a surface that is of the water path substrate 110 and that faces the heat exchanger 300 is the first surface 111, a surface that is of the refrigerant substrate 210 and that faces the heat exchanger 300 is the second surface 211, and an outer contour shape of the first surface 111 is the same as an outer contour shape of the second surface 211. For example, in some implementations, both the first surface 111 and the second surface 211 are square. In some implementations, both the first surface 111 and the second surface 211 are rectangular. Because the outer contour shape of the first surface 111 is the same as the outer contour shape of the second surface 211, the entire thermal management integrated module 11 in this implementation is more structured, so that miniaturization of the thermal management integrated module 11 is facilitated, and mounting convenience can be improved.

In some implementations, the first surface 111 and the second surface 211 have a same shape and size. Certainly, in some implementations, sizes of the first surface 111 and the second surface 211 may alternatively be different. For example, the entire thermal management integrated module 11 is arranged in a pyramid shape or a cone shape.

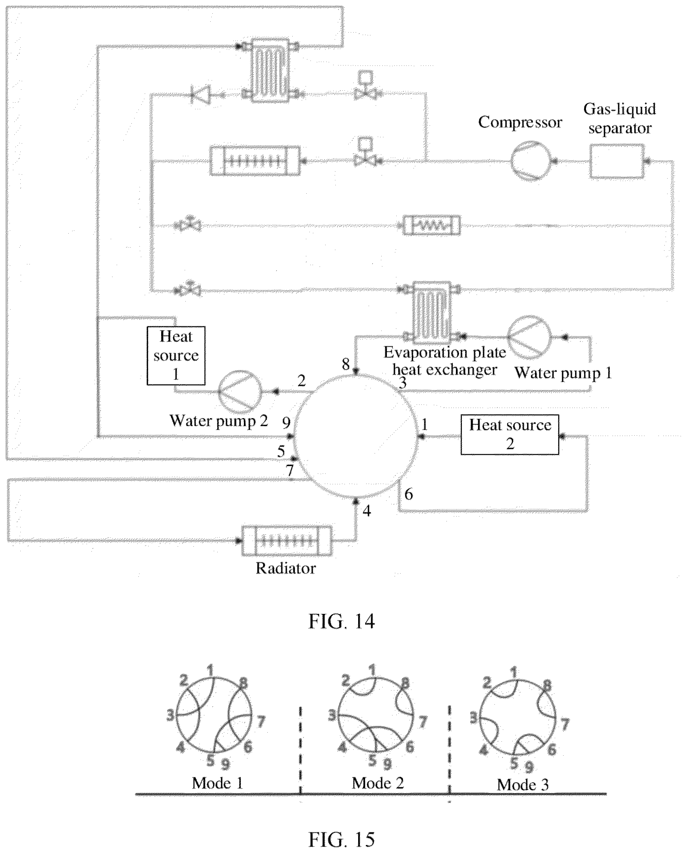

FIG. 14 is a diagram of a working principle of the thermal management system 1 according to an embodiment of this application. FIG. 15 shows a connection status of each water connection port 1511 when a multi-port valve 150 is in three different modes.

Refer to FIG. 14. The thermal management system 1 includes an evaporator, an evaporation plate heat exchanger, a condenser, a condensation plate heat exchanger, a compressor 14, a gas-liquid separator 13, a check valve 223, an expansion valve 221, a solenoid valve 222, a multi-port valve 150, a water bump 1-2, and a radiator. For the evaporator, the evaporation plate heat exchanger, the condenser, the condensation plate heat exchanger, the compressor 14, the gas-liquid separator 13, the check valve 223, the expansion valve 221, the solenoid valve 222, the multi-port valve 150, the water bump 1-2, and the radiator, refer to the foregoing descriptions of the evaporation heat exchange component 350, the condensation heat exchange component 340, the compressor 14, the gas-liquid separator 13, the check valve 223, the expansion valve 221, the solenoid valve 222, the multi-port valve 150, the water pump 140, and the radiator. Details are not described herein. In this embodiment, the thermal management object 2 adjusted by the thermal management system 1 is a heat source 1 and a heat source 2. For example, the heat source 1 is a powertrain, and the heat source 2 is a battery.

The multi-port valve 150 is an eight-port valve. The valve body 151 has nine water connection ports 1511: a port 1, a port 2, a port 3, a port 4, a port 6, a port 7, a port 8, a port 9, and a port 5. The port 5 is a proportionally adjustable port. Two ends of the evaporation plate heat exchanger are separately connected to the port 3 and the port 8, and the first medium flowing out of the port 3 flows into the port 8 through a water pump 1 and the evaporation plate heat exchanger. Two ends of the heat source 2 are separately connected to the port 1 and the port 6, and the first medium flowing out of the port 6 flows into the port 1 through the heat source 2. Two ends of the radiator are separately connected to the port 7 and the port 4, and the first medium flowing out of the port 7 flows into the port 4 through the radiator. One end of the heat source 1 is connected to the port 2, and the other end of the heat source 1 is connected to both the port 9 and the port 5. After flowing through the water pump 2 and the heat source 1, the first medium that flows out of the port 2 may directly flow into the port 9, or may flow into the port 5 after flowing through the condensation plate heat exchanger.

Refer to FIG. 15. In some implementations, the multi-port valve 150 has three modes. In a mode 1, the port 1 communicates with the port 3, the port 2 communicates with the port 4, the port 9 communicates with the port 7, the port 5 communicates with the port 7, and the port 6 communicates with the port 8. In a mode 2, the port 1 communicates with the port 2, the port 3 communicates with the port 9, the port 3 communicates with the port 5, the port 4 communicates with the port 6, and the port 7 communicates with the port 8. In a mode 3, the port 1 communicates with the port 2, the port 3 communicates with the port 4, the port 9 communicates with the port 6, the port 5 communicates with the port 6, and the port 7 communicates with the port 8. The actuator 153 drives the valve core 152 to rotate relative to the valve body 151, to implement conversion between the three modes.

It can be learned from the foregoing descriptions that, in the mode 1, a first plumbing may be formed: port 3→port 8→port 6→port 1→port 3. Because the first medium flowing out of the port 3 flows into the port 8 through the water pump 1 and the evaporation plate heat exchanger, and the evaporation plate heat exchanger performs evaporation for cooling, the first medium in the first plumbing can have a low temperature, to cool the heat source 2. When the heat source 2 is a battery, a powertrain, an electronic control module, or the like, the thermal management system 1 in the mode 1 can be used for heat dissipation of the battery, the powertrain, and the electronic control module in summer. When cold air generated by the evaporation plate heat exchanger blows to an interior vehicle, it can also cool the interior vehicle.

In addition, in the mode 1, a second plumbing may be further formed: port 7→port 4→port 2→port 9 (5)→port 7. In this case, heat dissipation may be performed on the heat source 1 through the radiator. When the port 5 is completely closed, the first medium heated by the condensation plate heat exchanger connected to the port 5 does not flow to the port 7. In this case, heat dissipation may be performed on the heat source 1 through the radiator, to cool the heat source 1. Different heat sources may be set as the heat source 1 based on a requirement. For example, the heat source 1 may alternatively be a battery, a powertrain, an electronic control module, or the like. In this case, the thermal management system 1 in mode 1 can be used for cooling in summer. When the port 5 is opened, a larger proportion to which the port 5 is opened indicates a larger proportion of the first media, heated by the condensation plate heat exchanger, flowing to the second plumbing, and indicates better heating effect. In this case, the heat source 1 may be heated.

It may be understood that the first plumbing and the second plumbing may be opened and closed independently. In summer, both the first plumbing and the second plumbing may be opened, and the port 9 is completely closed, to dissipate heat for the heat source 1 and the heat source 2. In winter, the first plumbing may be closed, the second plumbing may be opened, and the port 9 may be opened. The condenser performs heat dissipation to heat the heat source 1. For example, the battery is heated in winter.

In the mode 2, a third plumbing may be formed: port 2→port 9 (5)→port 3→port 8→port 7→port 4→port 6→port 1→port 2. When the port 5 is completely closed, the thermal management system 1 in the mode 2 may be used in summer. The first medium cooled by the evaporation plate heat exchanger may flow to the third plumbing, and the third plumbing is connected to the heat source 1, the heat source 2, and the radiator, to perform heat dissipation on the heat source 1 and the heat source 2 for cooling. When the port 5 is opened, and the evaporation plate heat exchanger stops working, the thermal management system 1 in the mode 2 may be used in winter. The first medium heated by the condensation plate heat exchanger may flow to the third plumbing, and the third plumbing is connected to the heat source 1, the heat source 2, and the radiator, to heat the heat source 1 and the heat source 2, and adjust temperatures of the heat source 1 and the heat source 2.

In the mode 3, a fourth plumbing may be formed: port 2→port 9 (5)→port 6→port 1→port 2. When the port 5 is opened, the first medium heated through heat dissipation of the condenser may flow to the fourth plumbing, to heat the heat source 1 and the heat source 2. In this case, the thermal management system 1 in the mode 3 may be used in winter. When the port 5 is closed, heat balance of the heat source 1 and heat balance of the heat source 2 may be implemented.

Similarly, in the mode 3, a fifth plumbing may be further formed: port 3→port 8→port 7→port 4→port 3. For example, in winter, the interior vehicle may be heated through the fifth plumbing.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A thermal management integrated module, comprising a water-side component, a refrigerant component, and a heat exchanger, wherein the water-side component and the refrigerant component are respectively located on two opposite sides of the heat exchanger, the water-side component comprises a water path substrate, a plumbing of the water path substrate is configured to accommodate a first medium, the refrigerant component comprises a refrigerant substrate, a plumbing of the refrigerant substrate is configured to accommodate a second medium, the heat exchanger is located in a gap space formed by the water path substrate and the refrigerant substrate, both the plumbing of the water path substrate and the plumbing of the refrigerant substrate communicate with a plumbing of the heat exchanger, so that the first medium exchanges heat with the second medium inside the heat exchanger, the water-side component has a first external connection port, and the first external connection port is configured to connect to a water tank in a thermal management system through a coolant hose.

2. The thermal management integrated module according to claim 1, wherein all functional components of the water-side component are distributed at other positions of the water path substrate other than a surface that is of the water path substrate and that faces the heat exchanger; and/or
all functional components of the refrigerant component are distributed at other positions of the refrigerant substrate other than a surface that is of the refrigerant substrate and that faces the heat exchanger.

3. The thermal management integrated module according to claim 2, wherein the water path substrate is provided with an inner cavity, and all the functional components of the water-side component are mounted in the inner cavity and/or on a side that is of the water path substrate and that is away from the heat exchanger.

4. The thermal management integrated module according to any one of claims 1 to 3, wherein the water-side component, the heat exchanger, and the refrigerant component are sequentially arranged in a first direction, and in the first direction, a projection that is of the heat exchanger and that is on the water path substrate is a first projection, and a projection that is of the heat exchanger and that is on the refrigerant substrate is a second projection; and
a distance between an edge of the first projection and an edge of the water path substrate is less than a first threshold, and/or a distance between an edge of the second projection and an edge of the refrigerant substrate is less than a second threshold.

5. The thermal management integrated module according to any one of claims 1 to 4, wherein the surface that is of the water path substrate and that faces the heat exchanger is a first surface, the surface that is of the refrigerant substrate and that faces the heat exchanger is a second surface, and an outer contour shape of the first surface is the same as an outer contour shape of the second surface.

6. The thermal management integrated module according to any one of claims 1 to 5, wherein at least a part of the heat exchanger is in contact with the water path substrate, and at least a part of the heat exchanger is in contact with the refrigerant substrate.

7. The thermal management integrated module according to claim 1, wherein some functional components of the water path substrate are multi-port valves, the water path substrate is provided with an inner cavity, the multi-port valve is located in the inner cavity, and a plurality of water connection ports of the multi-port valve correspondingly communicate with a plurality of plumbings of the water path substrate.

8. The thermal management integrated module according to any one of claims 1 to 7, wherein the water path substrate and/or the refrigerant substrate each comprise/comprises a fastening structure, and the fastening structure is configured to fasten the thermal management integrated module in a use environment.

9. The thermal management integrated module according to any one of claims 1 to 8, wherein the heat exchanger comprises two heat exchange components, the two heat exchange components are disposed in parallel between the water path substrate and the refrigerant substrate, an end face that is of each heat exchange component and that faces the water path substrate has a longer side and a shorter side, and the surface that is of the water path substrate and that faces the heat exchanger has a first side and a second side; and
the two heat exchange components are arranged in a second direction, the second direction is the same as an extension direction of the longer side, the first side corresponds to positions of the longer sides of the two heat exchange components, and the second side of the water path substrate corresponds to a position of the shorter side of one of the heat exchange components.

10. The thermal management integrated module according to any one of claims 1 to 8, wherein the heat exchanger comprises two heat exchange components, the two heat exchange components are disposed in parallel between the water path substrate and the refrigerant substrate, an end face that is of each heat exchange component and that faces the water path substrate has a longer side and a shorter side, and the surface that is of the water path substrate and that faces the heat exchanger has a first side and a second side; and
the two heat exchange components are arranged in a third direction, the third direction is the same as an extension direction of the shorter side, the first side corresponds to positions of the shorter sides of the two heat exchange components, and the second side of the water path substrate corresponds to a position of the longer side of one of the heat exchange components.

11. The thermal management integrated module according to any one of claims 1 to 10, wherein the refrigerant component comprises a second external connection port, and the second external connection port is configured to be connected to a gas-liquid separator in the thermal management system through a coolant hose.

12. A thermal management system, comprising a water tank, a gas-liquid separator, and the thermal management integrated module according to any one of claims 1 to 11, wherein the thermal management integrated module is connected to the water tank and the gas-liquid separator through coolant hoses.

13. A vehicle, comprising a battery, a powertrain, and the thermal management system according to claim 12, wherein the thermal management system is configured to perform thermal management on the battery and the powertrain.
